# EUROPÄISCHE PATENTSCHRIFT

(11) **EP 1 800 984 B1**
(45) Veröffentlichungstag und Bekanntmachung des Hinweises auf die Patenterteilung: **08.10.2008**
(21) Anmeldenummer: 07006945.5
(22) Anmeldetag: 12.07.2004
(51) Int. Cl.: B60T 17/00, B60T 11/32

(54) **Verfahren zum Wiederbefüllen von Bremskreisen nach einem starken Druckluftverbrauch**
Method for refilling brake circuits after a large consumption of compressed air
Procédé de réalimentation de circuits de freinage après une consommation importante d'air comprimé

(30) Priorität: 10.12.2003 DE 10357765
(43) Veröffentlichungstag der Anmeldung: 27.06.2007
(62) Teilanmeldung aus: 04740911.5
(73) Patentinhaber: WABCO GmbH, 30453 Hannover (DE)
(72) Erfinder: Detlefs, Carsten, 30952 Ronnenberg (DE); Diekmeyer, Heinrich, 30890 Barsinghausen (DE); Lippelt, Frank-Dietmar, 30890 Barsinghausen (DE); Reinhardt, Joachim, 30455 Hannover (DE); Strilka, Bernd, 30459 Hannover (DE)
(74) Vertreter: Günther, Constantin

(56) Entgegenhaltungen:
- EP-A- 0 810 136
- DE-A- 19 811 305
- DE-C- 4 109 741

## Beschreibung

Die Erfindung betrifft ein Verfahren zum Wiederbefüllen von Bremskreisen nach einem starken Druckluftverbrauch gemäß Oberbegriff des Anspruchs 1.

Aus der EP 0 810 136 A1 ist eine Druckmittelanlage mit sicherheitsrelevanten Druckmittelkreisen gemäß dem Oberbegriff des Patentanspruchs 1 bekannt. Bei dieser Druckmittelanlage soll zumindest für eine bestimmte Zeitdauer gewährleistet werden, dass die sicherheitsrelevanten Druckmittelkreise auch nach Ausfall einer Steuerenergie, welche die Druckmittelanlage steuert, aus einem nicht sicherheitsrelevanten Druckmittelkreis mit Druckmittel versorgt werden, wobei der nicht sicherheitsrelevante Druckmittelkreis einen geringeren Solldruck als die sicherheitsrelevanten Druckmittelkreise aufweist.

Es sind so genannte Mehrkreis-Schutzventile bekannt, die die Energiezufuhr in mehrere voneinander unabhängige Verbraucherkreise aufteilen und die bei Ausfall eines Kreises, beispielsweise durch Leitungsbruch, einen Mindestdruck in den intakten Kreisen aufrechterhalten. Tritt in einem Betriebsbremskreis ein Defekt auf, durch den mehr Luft verloren geht als durch den Kompressor nachgefüllt werden kann, so fällt in den Betriebsbremskreisen der Druck gemeinsam ab, bis der Schließdruck des Ventils erreicht ist. Der Druck im defekten Kreis fällt weiter ab, während der Schließdruck im intakten Kreis erhalten bleibt. Während der Druck im defekten Kreis weiter absinkt, kann der noch intakte Kreis wieder durch den Kompressor gefüllt werden, bis der Öffnungsdruck des defekten Kreises erreicht ist. Es entsteht ein dynamisches Gleichgewicht, bei welchem die geförderte Druckluft die noch intakten Kreise (auch Nebenverbraucherkreise) versorgen kann, gleichzeitig über den Defekt jedoch Luft verloren geht. Nachteilig ist, dass das Wiederauffüllen durch den Kompressor relativ viel

Zeit benötigt, da der Kompressor nur eine relativ geringe Förderleistung aufweist, nämlich in der Regel nur 200 bis 400 1 pro Minute. Die Nennenergie in der Bremsanlage wird entsprechend nur langsam wieder aufgebaut, was für die Systemsicherheit von Nachteil ist.

Die Aufgabe der vorliegenden Erfindung besteht darin, ein Verfahren anzugeben, durch das der Luftdruck in den Bremskreisen nach einem starken Druckluftverbrauch sehr schnell wieder aufgebaut werden kann.

Diese Aufgabe wird durch die Erfindung gemäß Anspruch 1 gelöst.

Vorteilhafte und zweckmäßige Weiterbildungen der Erfindung sind in den Unteransprüchen angegeben.

Die Erfindung schlägt vor, die Bremskreise nach einem starken Luftverbrauch aus einem Hochdruck-Verbraucherkreis zusätzlich zum Kompressor zu befüllen. Da ein Hochdruckkreis in der Regel eine wesentlich größere Luftmenge pro Zeiteinheit abgeben kann (bis zu mehreren tausend Liter/min) als ein Kompressor (ca. 200 bis 400 Liter/min) werden die intakten Bremskreise sehr viel schneller wieder aufgefüllt, als nur mit Hilfe des Kompressors. Dadurch kann die Nennenergie in der Bremsanlage in sehr kurzer Zeit wieder hergestellt werden, gegebenenfalls vermindert um einen defekten Kreis. Nach einem Kreisabriss ist das von besonderer Bedeutung. Durch die Verteilung der Energie zwischen den Kreisen wird die Systemsicherheit wesentlich verbessert. Um dies zu erreichen ist erfindungsgemäß für den Hochdruckkreis ein im stromlosen Grundzustand geschlossenes elektrisch betätigbares Ventil, vorzugsweise Magnetventil, (alternativ ist auch ein vorgesteuertes Ventil verwendbar) und sind erfindungsgemäß für die anderen Verbraucherkreise inklusive der Bremskreise im Grundzustand offene, elektrisch betätigbare Ventile, vorzugsweise Magnetventile, vorgesehen. Sämtliche Magnetventile stehen über eine gemeinsame Verteilerleitung miteinander in Verbindung. Zum Auffüllen der Bremsanlage braucht lediglich das Magnetventil des Hochdruckkreises in die Offenstellung geschaltet zu werden, um Druckluft aus dem Hochdruckkreis, in dem der Druck bzw. die Energie erhalten geblieben ist, über die offenen Magnetventile in die intakten Bremskreise strömen zu lassen.

Die Erfindung soll nachfolgend anhand der beigefügten Zeichnung, in der ein Ausführungsbeispiel dargestellt ist, näher erläutert werden.

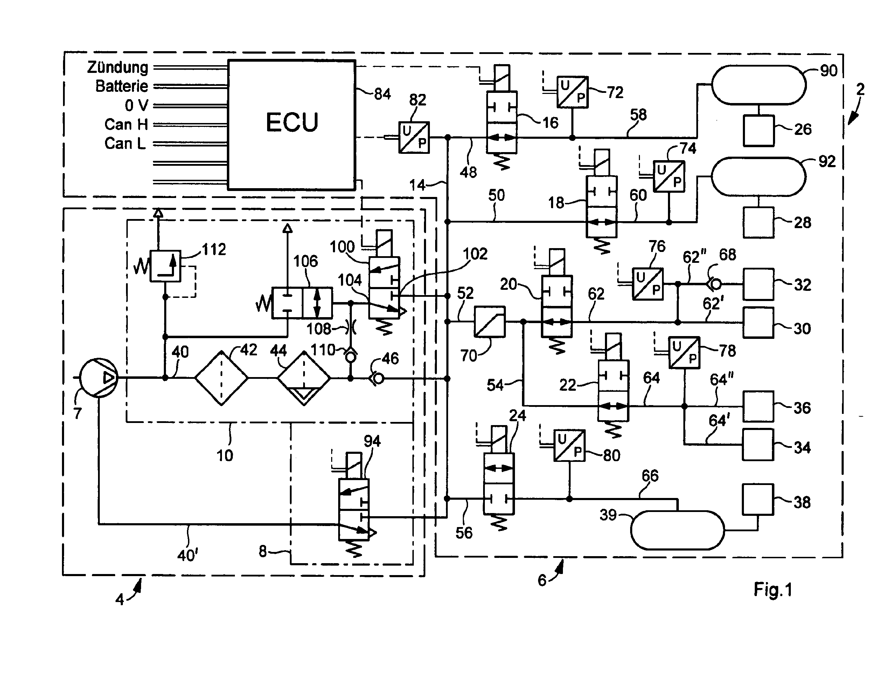

Es zeigen
- Fig. 1: ein Blockschaltbild einer erfindungsgemäß ausgebildeten Vorrichtung zum Wiederauffüllen von Bremskreisen nach einem starken Druckluftverbrauch und
- Fig. 2: ein Diagramm der Druckverläufe bei einem Wiederauffüllvorgang der Bremsanlage.

Druckluftleitungen sind in der Zeichnung durchgezogene Linien, elektrische Leitungen sind gestrichelte Linien.

Die Zeichnung zeigt eine Druckluftanlage 2 mit einem Druckluftversorgungsteil 4 und einem Verbraucherteil 6. Der Druckluftversorgungsteil 4 umfasst einen Kompressor 7, eine Kompressorsteuereinrichtung 8 und ein Lufttrocknerteil 10.

Der Verbraucherteil 6 weist eine Druckluftverteilerleitung 14, mehrere elektrisch betätigbare Magnetventile 16, 18, 20, 22, 24 mit Rückstellfeder und mehrere über die Magnetventile mit Druckluft versorgte Verbraucherkreise 26, 28, 30, 32, 34, 36, 38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62", wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64" .

Drucksensoren 72, 74, 76, 78, 80, 82 überwachen den Druck in den Verbraucherkreisen und in der Verteilerleitung 14 und geben den jeweiligen Druck als Drucksignal an eine elektronische Steuereinheit 84, die die Magnetventile direkt steuert.

Anstelle des Druckes können auch andere Zustandsgrößen, wie Luftmenge, Luftmasse, Energie, in den Verbraucherkreisen und in der Verbindungsleitung überwacht werden.

Die Verbraucherkreise 26, 28 können Betriebsbremskreise sein. Der Verbraucherkreis 30 kann ein Anhängerbremskreis sein, wobei normalerweise zwei Leitungen, eine Versorgungsund eine Bremsleitung, zum Anhänger führen. Der Verbraucherkreis 32 kann ein Feststellbremskreis mit Federspeicher sein. Die Verbraucherkreise 34 und 36 können Nebenverbrauchskreise, wie Fahrerhausfederung, Türsteuerung etc., d.h. alles was nichts mit den Bremskreisen zu tun hat, sein. Der Verbraucherkreis 38 kann ein Hochdruckkreis sein.

Die Betriebsbremskreise 26, 28 weisen Druckluftbehälter 90, 92 entsprechend den Richtlinien 98/12/ EG auf. Der Hochdruckkreis 38 weist einen Druckluftbehälter 39 auf.

Die erfindungsgemäße Druckluftanlage ermöglicht, auf Druckluftbehälter in den Kreisen 30, 32, 34, 36 zu verzichten. Es ist z.B. zulässig, andere Verbraucher aus den Betriebsbremskreisen (Kreise 26 und 28) zu versorgen, wenn die Bremsfunktion oder Bremswirkung der Betriebsbremskreise 26 und 28 nicht beeinträchtigt wird.

Der Kompressor 7 wird von der Kompressorsteuerung 8 mechanisch (pneumatisch) über eine Leitung 40' gesteuert. Die Kompressorsteuerung 8 umfasst ein durch die elektronische Steuereinheit 84 schaltbares Magnetventil 94 mit kleiner Nennweite, das im stromlosen Grundzustand, wie dargestellt, entlüftet ist, wodurch der Kompressor 7 eingeschaltet ist. Wenn der Kompressor 7 ausgeschaltet werden soll, weil beispielsweise sämtliche Verbraucherkreise mit Druckluft aufgefüllt sind, schaltet die Steuereinheit 84 das Magnetventil 94 um, so dass der druckbetätigbare Kompressor über die Leitung 40' ausgeschaltet wird. Wird das Magnetventil 94, weil beispielsweise ein Verbraucherkreis Druckluft benötigt, stromlos geschaltet, wird das Magnetventil 94 wieder in den in der Zeichnung dargestellten Grundzustand geschaltet, wodurch die Leitung 40' entlüftet wird, so dass der Kompressor 7 eingeschaltet wird.

Der Lufttrocknerteil 10 umfasst ein Magnetventil 100 mit kleiner Nennweite, dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zum Entlüften des Lufttrockners dient.

Wenn das Magnetventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Magnetventile 16, 18, 20, 22, 24 werden von der Steuereinheit 84 gesteuert, wobei die Magnetventile 16 bis 22 der Verbraucherkreise 26 bis 34 im stromlosen Grundzustand offen sind, während das Magnetventil 24 des Hochdruckkreises 38 im stromlosen Grundzustand geschlossen ist. Es können auch vorgesteuerte Magnetventile eingesetzt werden. Der Druck in den Kreisen wird unmittelbar an den Magnetventilen überwacht durch die Drucksensoren 72, 74, 76, 78, 80.

Sollte in einem Verbraucherkreis, beispielsweise im Kreis 30 (Anhängerbremskreis) der Druck absinken, erfolgt die Druckluftversorgung durch die Betriebsbremskreise über die offenen Magnetventile mit, wobei der Druck in den Nebenverbraucherkreisen 30 bis 36 durch den Druckbegrenzer 70 auf ein niedrigeres Niveau, beispielsweise 8,5 bar, als das Druckniveau, beispielsweise 10,5 bar, der Betriebsbremskreise 26 und 28 eingestellt wird (vgl. unten). Der Hochdruckkreis 38 ist normalerweise durch das Magnetventil 24 abgesperrt und steht somit nicht mit den übrigen Kreisen in Verbindung. Er weist ein höheres Druckniveau, beispielsweise 12,5 bar auf.

Bei der erfindungsgemäßen Druckluftanlage werden die Drücke in sämtlichen Verbraucherkreisen 26 bis 38 mit Hilfe der Drucksensoren 72 bis 80 gemessen, die der elektronischen Steuereinrichtung 84 elektrische Drucksignale zur Auswertung übermittelt. Die Steuereinrichtung vergleicht die gemessenen Druckwerte mit einem unteren Schwellwert, der dem einzustellenden Druck im jeweiligen Verbraucherkreis entspricht. Unterschreitet der Druck der Bremskreise infolge eines starken Luftverbrauchs oder Leitungsbruchs oder -abrisses diesen Schwellwert, schaltet die Steuereinrichtung das Magnetventil 24 des Hochdruckkreises 38 in die Offenstellung, so dass der Hochdruckkreis über die Verbindungsleitung 14 und die offenen Magnetventile 16 und 18 mit den Bremskreisen 26 und 28 verbunden wird und die im Hochdruckkreis gespeicherte Energie in die intakten Bremskreise geleitet wird und somit die intakten Bremskreise wieder aufgefüllt werden. Gleichzeitig sperrt die Steuereinrichtung 84 die defekten Kreise ab, indem sie deren Magnetventile in die Schließstellung schaltet. Gleichzeitig fördert auch der Kompressor 7 in die intakten Bremskreise.

Das Wiederauffüllen erfolgt sehr schnell, da der Hochdruckkreis eine wesentlich größere Luftmenge pro Zeiteinheit in die Bremskreise fördert (bis zu mehreren tausend Liter/min), als der Kompressor, welcher bei den eingesetzten Ausführungen eine Förderleistung, wie oben schon erwähnt, von etwa 200 bis 400 1/min hat.

Sobald die Steuereinrichtung Druckgleichheit zwischen dem Hochdruckkreis und den aufgefüllten Bremskreisen oder das Erreichen des Solldruckwertes in den Bremskreisen feststellt, schließt sie das Magnetventil 24 wieder zur Unterbrechung der Verbindung zu den Bremskreisen.

Das erfindungsgemäße Verfahren sorgt für eine Energieverteilung zwischen den Verbraucherkreisen, wodurch sehr sichere Betriebsbedingungen erhalten werden.

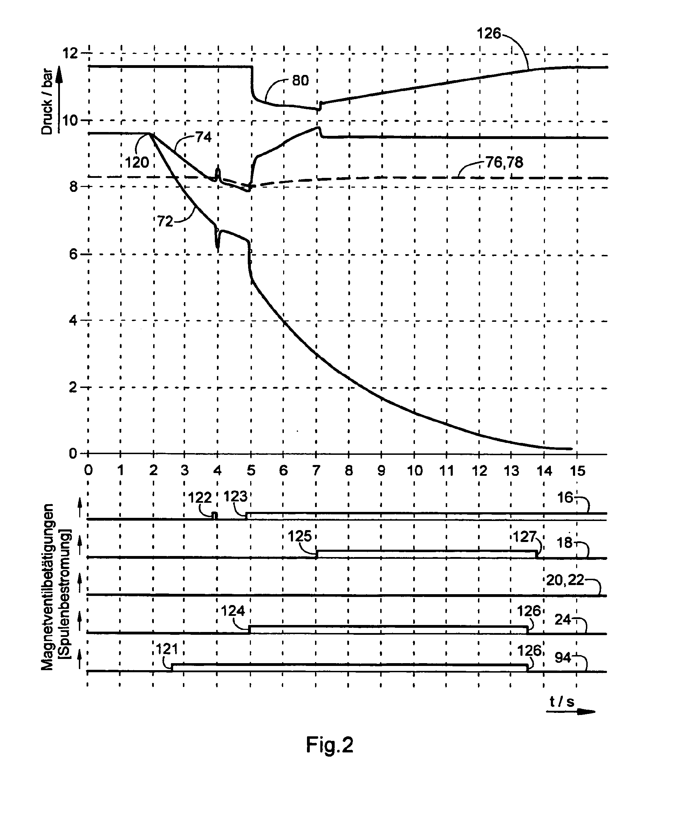

Die Fig. 2 zeigt die Druckverläufe bei einem Bremskreisausfall bspw. durch Leitungsabriss des Bremskreises 26 zum Zeitpunkt 120 und beim Wiederauffüllen des intakten Bremskreises 28 zum Zeitpunkt 124. Mit dem Abfall des Druckes im Kreis 26 (Kurve 72) fällt auch der Druck im pneumatisch verbundenen Bremskreis 28 (siehe Kurve 74) und in der Verbindungsleitung 14 (nicht dargestellt) ab. Der Druckabfall in der Verbindungsleitung 14 hat zur Folge, dass zum Zeitpunkt 121 das den Kompressor einschaltende Magnetventil 94 betätigt wird. Zur Wiederbelüftung des intakten Bremskreises 28 wird zum Zeitpunkt 124 das Magnetventil 24 des Hochdruckkreises 38 in den geöffneten Zustand geschaltet und der defekte Bremskreis 26 praktisch zeitgleich durch Schließen des Magnetventils 16 geschlossen, so dass eine schnelle Wiederbelüftung des intakten Kreises 28 und gegebenenfalls der pneumatisch gekoppelten, ebenfalls intakten Kreise 30 und 36 erfolgen kann. Der Druck in diesen Kreisen 30 und 36 ist während des gesamten Entlüftungsvorganges wenig verändert, da der Druckbegrenzer 70 für eine Entkopplung der Drucksensoren von der Verteilungsleitung 14 sorgt, vergleiche gestrichelte Druckkurve 76, 78 in der Figur 2.

In der Figur 2 ist das Schließen des Magnetventils 16 zu einem Zeitpunkt 123 dargestellt, der zeitlich sehr kurz vor dem Zeitpunkt 124 liegt; dies wird weiter unten etwas näher erläutert. Mit dem Öffnen des Magnetventils 24 des Hochdruckkreises 38 und Schließen des defekten Bremskreises 26 zum Zeitpunkt 124 steigt der Druck im Bremskreis 28 sehr schnell an, bis Druckgleichheit zwischen Hochdruckkreis und Bremskreis hergestellt ist oder der Solldruck des Bremskreises erreicht ist. Am Drucksensor 80 ist der Druckabfall im Hochdruckkreis während dieser schnellen Wiederbelüftung zu erkennen, siehe Abfall der Druckkurve 80 des Hochdruckkreises 38 zum Zeitpunkt 124. Nach erfolgter Wiederbelüftung wird der Kreis 28 durch Schaltung des Magnetventils 18 in den Sperrzustand zum Zeitpunkt 125 für eine bestimmte Zeit abgesperrt. Während dieser Zeit wird der Hochdruckkreis über den Kompressor, der seit der Betätigung des Magnetventils 94 zum Zeitpunkt 121 eingeschaltet ist, wiederbefüllt. Zum Abschluss dieser Wiederbefüllung (Zeitpunkt 126) werden die Steuersignale für die Magnetventile 94 und 24 wieder zurückgesetzt, also das Magnetventil 94 elektrisch bestromt und das Magnetventil 24 wieder in den geschlossenen Grundzustand geschaltet. Danach wird auch das Steuersignal für den Bremskreis 28 zurückgesetzt (Zeitpunkt 127), also das Magnetventil 18 wieder in den offenen Grundzustand geschaltet.

Mit den Bezugzeichen 122 und 123 sind zwei dem Zeitpunkt 124 des endgültigen Sperrens des defekten Kreises 26 vorgeschaltete kurze auf den Steuereingang des Magnetventils 16 gegebene Testsperrimpulse von z. B. 0,2 sec Dauer bezeichnet. Solche Testsperrimpulse können zur sicheren Erkennung des Ausfalls eines Kreises (hier des Kreises 26) eingesetzt werden. Der Testsperrimpuls zum Zeitpunkt 122 sperrt für den angegebenen Zeitbereich von 0,2 sec das Magnetventil 16. Als Folge dieser Sperrung erhöht sich im nicht betroffenen Bremskreis 28 der Druck am Drucksensor 74 kurzzeitig, weil mit einer Unterbrechung der Entlüftung durch den defekten Kreis 26 der Druckbehälter 92 den intakten Kreis 28 wieder belüften kann. Bezüglich des defekten Kreises 26 findet am Drucksensor 72 während der Zeit des Testsperrimpulses ein verstärkter Druckabfall statt, da die Nachspeisung durch die intakten Kreise unterbrochen ist. Da sich einzig beim Kreis 26 der Druck während des Testsperrimpulses verstärkt absenkt, wird die Vermutung, dass dieser Kreis defekt ist, erhärtet. Um zu einer Gewissheit zu gelangen, ob diese Schlussfolgerung richtig ist, kann dieser Test durch pulsartiges Abschalten des Ventils 16 mehrere Male wiederholt werden. Im Ausführungsbeispiel nach Figur 2 wird dies zum Zeitpunkt 123 ein zweites und letztes Mal durchgeführt. Erneut fällt am Kreis 26 der Druck verstärkt ab. Nun wird endgültig festgestellt, dass der Kreis 26 der defekte Kreis ist. Er bleibt im Weiteren (ab dem Zeitpunkt 124) dauerhaft gesperrt.

## Patentansprüche

1. Verfahren zum Wiederauffüllen von Betriebsbremskreisen nach einem starken Druckluftverbrauch oder -verlust, wobei die Betriebsbremskreise Druckluftverbraucherkreise eines Verbraucherteils einer Druckluftanlage für Fahrzeuge sind, welche mindestens einen weiteren Druckluftverbraucherkreis mit Druckluftbehälter aufweist, **gekennzeichnet durch** Herstellen einer Verbindung zwischen dem mindestens einen weiteren Druckluftverbraucherkreis mit Druckluftbehälter und den intakten Betriebsbremskreisen zum Wiederbefüllen dieser Betriebsbremskreise aus dem Druckluftbehälter des mindestens einen weiteren Druckluftverbraucherkreises, wobei der weitere Druckluftverbraucherkreis ein Hochdruckkreis ist, dessen Druckniveau höher als das der Betriebsbremskreise ist.

2. Verfahren nach Anspruch 1, **gekennzeichnet durch** folgende Schritte:
- laufende Ermittlung der Istwerte einer Zustandsgröße (Druck, Luftmenge, Luftmasse, Energie) in den Betriebsbremskreisen und dem mindest einen weiteren Druckluftverbraucherkreis,
- Vergleich der Istwerte mit einem unteren Schwellwert,
- Absperren der bei Unterschreitung des Schwellwertes als defekt erkannten Betriebsbremskreise und
- Wiederauffüllen der intakten Betriebsbremskreise aus dem Druckluftbehälter des mindest einen weiteren Druckluftverbraucherkreises.

3. Verfahren nach Anspruch 2, **dadurch gekennzeichnet, dass** der Schwellwert dem einzustellenden Wert der Zustandsgröße im jeweiligen Druckluftverbraucherkreis entspricht.

4. Verfahren nach Anspruch 1, **dadurch gekennzeichnet, dass** die Verbindung zwischen dem mindest einen weiteren Druckluftverbraucherkreis und intakten Betriebsbremskreisen unterbrochen wird bei Gleichheit der Zustandsgröße zwischen dem mindest einen weiteren Druckluftverbraucherkreis und den Betriebsbremskreisen oder bei Erreichen des Sollwertes der Zustandsgröße in den wiederaufgefüllten Betriebsbremskreisen.

## Claims

1. Method of refilling service brake circuits after a substantial consumption or loss of compressed air, the service brake circuits being compressed air consumer circuits of a consumer part of a compressed air system for vehicles, which system has at least one further compressed air consumer circuit having a compressed air reservoir, **characterized by** establishment of a connection between the at least one further compressed air consumer circuit having a compressed air reservoir and the intact service brake circuits for refilling those service brake circuits from the compressed air reservoir of the at least one further compressed air consumer circuit, the further compressed air consumer circuit being a high-pressure circuit the pressure level of which is higher than that of the service brake circuits.

2. Method according to claim 1, **characterized by** the following steps:
- continuously determining the actual values of a state variable (pressure, air volume, air mass, energy) in the service brake circuits and the at least one further compressed air consumer circuit,
- comparing the actual values with a lower threshold value,
- blocking off the service brake circuits identified as being defective on falling below the threshold value and
- refilling the intact service brake circuits from the compressed air reservoir of the at least one further compressed air consumer circuit.

3. Method according to claim 2, **characterized in that** the threshold value corresponds to the value of the state variable to be set in the respective compressed air consumer circuit.

4. Method according to claim 1, **characterized in that** the connection between the at least one further compressed air consumer circuit and intact service brake circuits is broken when the state variables of the at least one further compressed air consumer circuit and the service brake circuits are equal or when the desired value of the state variable is achieved in the refilled service brake circuits.

## Revendications

1. Procédé de reremplissage de circuits de frein de service après une forte consommation ou une perte en air comprimé, les circuits de frein de service étant des circuits de consommation d'air comprimé d'un consommateur d'une installation en air comprimé pour véhicules qui présente au moins un autre circuit consommateur d'air comprimé avec réservoir d'air comprimé, **caractérisé par** l'établissement d'une liaison entre ledit au moins un autre circuit consommateur d'air comprimé avec des réservoirs d'air comprimé et les circuits de frein de service intact pour reremplir ces circuits de frein de service à partir du récipient d'air comprimé dudit au moins un autre circuit consommateur d'air comprimé, l'autre circuit consommateur d'air comprimé est un circuit à haute pression dont le niveau de pression est supérieur à celui des circuits de freins de service.

2. Procédé selon la revendication 1, **caractérisé par** les étapes suivantes:
- détermination en continu des valeurs réelles d'un paramètre d'état (pression, quantité d'air, masse d'air, énergie) dans les circuits de frein de service et ledit au moins un autre circuit de consommateur d'air comprimé,
- comparaison des valeurs réelles avec une valeur seuil inférieure,
- arrêt du circuit de frein de service reconnu comme défectueux lors du passage en dessous de la valeur seuil,
- reremplissage des circuits de freins de service intacts à partir du réservoir d'air comprimé dudit au moins un autre circuit consommateur d'air comprimé.

3. Procédé selon la revendication 2, **caractérisé en ce que** la valeur seuil correspond à la valeur à régler du paramètre d'état dans le circuit consommateur d'air comprimé respectif.

4. Procédé selon la revendication 1, **caractérisé en ce que** la liaison entre ledit au moins un circuit consommateur d'air comprimé et des circuits de frein de service intacts est interrompu lorsque le paramètre d'état entre ledit au moins un autre circuit consommateur d'air comprimé et les circuits de freins de service est identique ou lorsque la valeur consigne du paramètre d'état dans les circuits de frein de service reremplis est atteinte.
